# EUROPEAN PATENT SPECIFICATION

(11) **EP 1 094 896 B1**
(45) Date of publication and mention of the grant of the patent: **27.04.2005**
(21) Application number: 99925273.7
(22) Date of filing: 31.05.1999
(51) Int. Cl.: B01J 35/06, F23D 14/00, B01J 23/00

(54) **PROCESS FOR PRODUCING METALLIC FIBER BOARDS FUNCTIONALIZED BY CATALYSTS**
HERSTELLUNGSVERFAHREN FÜR KATALYTISCHE FUNKTIONALISIERTE METALLISCHE FASERPLATTEN
PROCEDE DE PRODUCTION DES PANNEAUX DE FIBRES METALLIQUES FONCTIONNALISES PAR DES CATALYSEURS

(30) Priority: 03.06.1998 IT MI981245
(43) Date of publication of application: 02.05.2001
(73) Proprietor: SAES GETTERS S.p.A., 20020 Lainate (Milano) (IT)
(72) Inventor: TOIA, Luca, I-21052 Busto Arsizio (IT); BOFFITO, Claudio, I-20017 Rho (IT); RAGAINI, Vittorio, I-20149 Milano (IT); VITALI, Stefania, I-20135 Milano (IT); BIANCHI, Claudia, Letizia, I-20149 Milano (IT)
(74) Representative: Adorno, Silvano
(86) International application number: PCT/IT1999/000150
(87) International publication number: WO 1999/062636

(56) References cited:
- EP-A- 0 415 835
- EP-A- 0 640 382
- WO-A-83/01017
- FR-A- 1 467 917
- FR-A- 2 347 976
- FR-A- 2 460 388

## Description

The present invention relates to a process for the production of metallic fiber boards functionalized by catalysts.

Particularly, the invention relates to a process for the production of metallic fiber boards whose surface is functionalized by catalysts for the oxidation of hydrocarbons, suitable to be used in different hydrocarbon burning devices, such as household boilers.

House boilers produce heat by combustion of hydrocarbon gases, only methane being used in recent years. In order to accomplish methane complete combustion by traditional boilers, preventing unburnt species and CO to be introduced in the atmosphere, temperatures of about 800°C are needed; these temperatures, though, allow undesirable nitrogen oxides to be formed, generally referred to as NOₓ, which are then emitted into the atmosphere causing serious pollution problems. Various systems have been studied to solve this problem, among which the catalytic ones; the last are the ones allowing methane complete combustion to be obtained at the lowest working temperatures, avoiding NOₓ formation at the source. Generally these systems are provided by a catalyst laid on a metallic or ceramic substrate. The substrate is requested to have a widely open structure in order to allow the air/methane mixture to pass easily; for instance, wire nets, metallic or ceramic bodies provided with holes, or boards or nets made of metallic or ceramic fibers can be used.

The article "Performances of premixed-air fibrous burners with a metallic and ceramic matrix" of Accornero et al., published on the magazine "CH₄ Energia Metano", 1995, No.2, pages 20-33, discloses systems for lowering the methane combustion temperature constituted by boards made of fibers of a Fe-Cr-Al alloy, having on their surface an alumina layer on which a layer of lanthanum manganite, LaMnO₃, is laid with a catalytic function. The article gives no account of the LaMnO₃ layer preparation.

FR-A-2347976 describes catalytic boards and methods for the production thereof. According to this document a substrate made of an iron-based alloy containing aluminum, the surface of which may either be oxidised or not, is first covered with an oxidic layer, preferably consisting of a mixed aluminum-chromium oxide with a small percentage of yttrium oxide having the function of inhibiting the growing of oxide grains; the thus covered substrate is functionalized with a catalytic layer, comprising an oxide (preferably aluminum oxide containing a small percentage of yttrium oxide) and a catalyst chosen among the metals of Group VIII of the periodic table. In order to enhance catalytic activity, it is required than the first mixed-oxide layer be porous. In order to produce a porous first oxidic layer, this document teaches to first prepare colloidal particles of the oxides by vapor condensation methods; then a solution containing these particles is prepared, and the substrate is covered by immersion in said solution. This covering step is followed by a thermal treatment, at temperatures preferably between about 400 and 850°C, to consolidate the layer.

EP-A-640382 describes the production of metal based filters, made of woven or non-woven fibers of Fe-Cr-Al, Ni-Cr-Al or Fe-Ni-Cr-Al alloys, possibly added of 0.05-0.5% by weight of elements such as Y or Nd for increased heat resistance. These alloys are first thermally oxidized to grow alumina whiskers on the fiber surface; the whiskers are then functionalized with a catalyst (e.g. Pd or Pt). By the teachings of this document, the need of the use of an intermediate oxidic layer between thermally grown alumina and the catalyst is avoided, as the thermal oxide has already a high specific area (surface area for unit weight). This can be obtained however only at the expense of a reduced freedom in operating parameters. As explained in this document, the Al content in the fibers, and in particular in the surface region of said fibers, must be kept between about 1 and 15% by weight, and a previous enrichment in aluminum of the surface may be required; also, the temperature for thermal growth of alumina must be kept between 800 and 1000°C, as at temperatures lower than 800°C the growth of the oxide requires too long times, while at temperatures higher than 1000°C the thermally grown oxide has a smooth surface and thus a reduced specific area.

The patent application WO 97/02092 discloses catalytic systems obtained starting from a perforated foil or a metallic grid on which a porous ceramic layer, preferably made of alumina or zirconia, is laid by means of techniques such as those indicated by the English language definitions "plasma spraying", "flame spraying", "detonation spraying", etc. The ceramic layer is then impregnated with a catalyst precursor solution or suspension, and after suitable thermal treatments the final catalytic system is obtained. However, the production of the catalytic systems disclosed in this document is disadvantageous in that, by the above mentioned techniques, only the metallic substrate side facing the spraying nozzles can be coated with the ceramic layer; coating of two opposite sides of substantially flat bodies, such as perforated foils or nets requires two successive coating phases, while fibrous board coating is not possible by the techniques disclosed in application WO 97/02092, because ceramic material particles (or drops) adhere to the first contacted surface, constituted by the most external fibers.

Object of the present invention is to provide a process for the production of metallic fiber boards functionalized by catalysts.

This object is obtained according to the present invention by means of a process comprising the following steps:
- providing a metallic fiber board;
- growing a first superficial layer of oxide on the board fibers by thermal oxidation;
- forming a second layer of porous oxide on the first oxide layer by atomization of a solution of a precursor compound of the oxide of second layer and subsequent thermal decomposition of said precursor compound;
- functionalizing the second oxide layer by means of a catalyst.

According to alternative possibilities of carrying out the invention, the formation and the functionalization of the porous oxide layer can be accomplished in two subsequent or contemporary operations; in both cases, a stabilizing thermal treatment preferably follows the phases of second oxide layer formation and functionalization.

The invention will be disclosed in the following with reference to the Figures, wherein:
- Fig. 1 shows a metallic fiber board;
- Fig. 2 shows the cross-section of a functionalized fiber obtained according to a first embodiment of the process of the invention;
- Fig. 3 shows the cross-section of a functionalized fiber obtained according to a second embodiment of the process of the invention;
- Fig. 4 schematically shows the experimental setup for carrying out methane combustion tests;
- Fig. 5 shows the results of two methane combustion tests, carried out respectively with a functionalized metallic fiber board according to the invention and with a reference board.

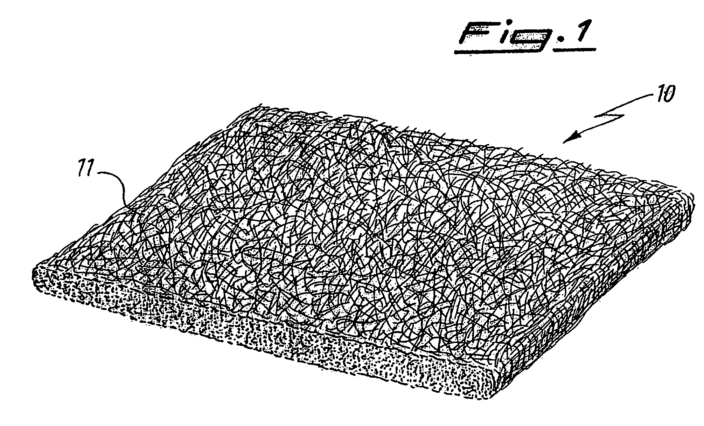

Fig. 1 generally shows a metallic fiber board which can be obtained according to the process of the invention.

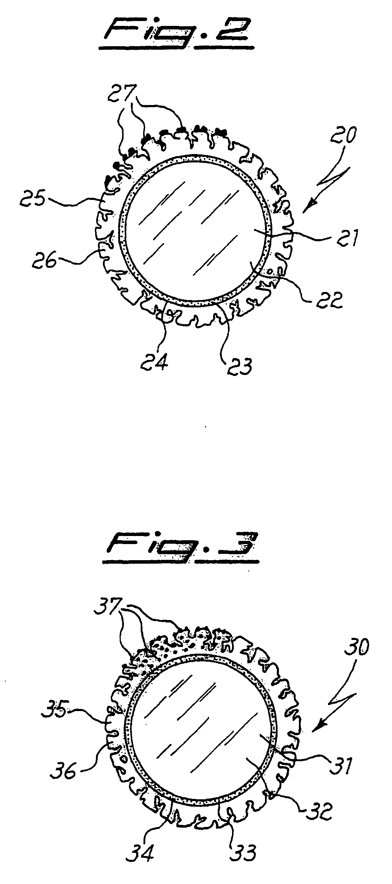

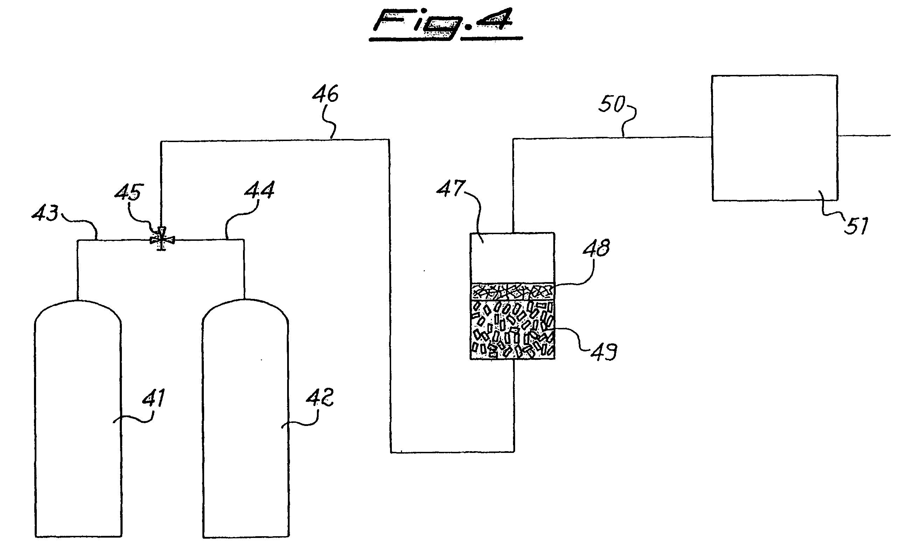

Referring to Figs. 2 and 3, two functionalized fibers to be obtained according to two alternative embodiments of the invention are shown in cross-section (the various constituting parts being not scaled). The functionalized fibers 20; 30 are formed of a fiber 21; 31 made of metal 22; 32 which has a first layer 23; 33 of oxide 24; 34 grown thereon; then, on this first layer a second layer 25; 35 of oxide 26; 36 is laid, having in one case the catalyst 27 deposited on the surface, while in the other case the catalyst 37 is distributed on the surface and inside the oxide layer.

Metallic fiber boards 21; 31 suitable for the invention can be made of steel fibers or, preferably, of an alloy containing iron, chromium and aluminum, besides small percentages of other elements, known as Fecralloy® (registered trademark of the company UKAEA, Didcot, Great Britain); this alloy shows refractory characteristics, and therefore is suitable for the extended use at high temperatures, like in the considered application for boiler burners. Fecralloy® fiber boards are available from the company N.V. Bekaert SA, Zwevegem, Belgium, their trade-name being Bekitherm®. Bekitherm® boards can be variously shaped and adapted to various kinds of burners; generally flat boards with a rectangular geometry, or boards shaped as a hemispherical cap are employed.

A first layer 23; 33 of oxide 24; 34 is grown on the fiber surface of the Fecralloy® board by a high temperature treatment in an oxidizing environment. The oxide layer formed on the fiber surfaces when the Febralloy® alloy is employed is mainly composed by aluminum oxide; the alloy refractory characteristics are due to the oxide formation. The oxide first layer 23; 33 has preferably a thickness in the range from 5 to 25 nanometers. The thermal treatment can be performed, for example, in furnaces or muffles, under a static or flowing atmosphere; in both cases the atmosphere can be constituted by air or be a modified atmosphere, for example oxygen, air added with oxygen, nitrogen/oxygen mixtures or water vapor. Obtaining of the desired thickness of the first oxide layer depends on the time and on the treatment temperature. These parameters can vary within a wide range, being related to each other by an inverse proportionality relationship; it is possible to operate from periods of about 10 minutes at temperatures of about 1200°C, to periods of about 10 hours at temperatures of about 550°C. Operating under air is preferable, at temperatures between about 1000°C and 1100°C for periods, respectively, between about two hours and half an hour. The resulting oxide layer is generally very compact.

The following step of the process consists of forming a second layer 25; 35 of oxide 26; 36 on the first one. The second oxide layer is, unlike the first one, porous and has a large specific surface, thus representing an excellent substrate for catalytic species. The second oxide layer is obtained by atomization of a solution of a compound precursor of the oxide 26; 36 and subsequent thermal decomposition of the precursor. The metallic fiber board coated with the first oxide layer 23; 33 is kept at a temperature from about 50°C to about 150°C; at lower temperatures the solvent evaporation rate is too low and most of the solution percolates through the fibrous board, causing a loss of material and a resulting poor method yield; on the contrary, at temperatures higher than about 150°C the solvent evaporation is too fast, so that the solution has not time enough to spread inside the fibrous board, and only a coating of the board fibers which are the most external and facing the spraying nozzle is obtained by the oxide precursor, while the most internal ones with respect to the board turn out to be substantially not coated.

The composition of the solution to be atomized is allowed to be widely variable. In order to choose such a composition, first the oxide to be laid must be determined, and therefore a precursor/solvent combination must be chosen such as to prevent the solution from being viscous or from providing a colloidal suspension, thus allowing it to be easily atomized.

The second layer can be constituted by various oxides 26; 36, among which, for example, aluminum oxide, Al₂O₃, silicon oxide, SiO₂, and combinations thereof. Since the first layer 23; 33 is substantially composed by aluminum oxide, the same oxide is preferably used to form the second layer 25; 35, in order to favour adhesion of the two layers.

Easily soluble salts are used as oxide precursors, such as for example nitrates or acetates, or organometallic species such as alkoxides, having the general formula M(OX)ₙ, wherein M represents the cation whose oxide has to be obtained, X is a hydrocarbon radical and n coincides with the valence of the M cation. Water, lower alcohols, or hydroalcoholic mixtures are generally used as solvents; in order to enhance the solution homogeneity, its pH can be adjusted to values adapted to prevent colloidal species formation.

When the Fecralloy® fibrous board is used, the atomized solution contains preferably a precursor of the aluminum oxide. Preferred precursors are nitrate, Al(NO₃)₃, and isopropylate Al(-OCH(CH₃)₂)₃. As the solvent, the use of a mixture composed, in weight, of about two thirds of water and one third of isopropylic alcohol is preferred. The solution concentration is preferably the saturation concentration, allowing a higher yield to be obtained with the working time being the same.

The resulting solution is atomized on the board kept at a temperature from 50 to 150°C, generally from about 80 to about 120°C, by using spraying nozzles and conditions known in the art. Atomization carrier gases can be various, for instance air, argon, nitrogen.

The formation of the second layer 25; 35 of oxide is preferably performed by alternating atomization and standby phases. In fact, a continuous atomization could cause the substrate to cool excessively, with the above mentioned result of loosing excessive solution by percolation through the board fibers. Using solutions with a saturation concentration prevents the already formed precursor deposit to be solved and removed by the successive solution atomization steps. The best results have been found to be obtained by successive atomization steps of two minutes each, with an atomization flow rate of about 1 ml of solution for 100cm² of the board geometric surface; successive atomizations are separated by standby phases lasting between about 5 and 10 min. Optimal thickness values of the layer 25; 35 of porous oxide are obtained by a number of atomizations varying from about 10 to 100; the resulting second oxide layer thickness values vary from about 80 to 200 nanometers.

The thus coated fibrous board is preferably treated in a muffle under air at a temperature of about 500°C for a period of time from 1 to 3 hours. Such a treatment has the purpose of removing completely the solvent possibly left in the deposit and of performing the conversion of the precursor compound to the corresponding oxide 26; 36. A previous solvent-removing treatment, at temperatures of about 200-250°C for a few minutes, can be performed before this thermal treatment.

The last phase of the process of the invention is the oxide 25; 35 layer functionalization by the catalyst 27; 37 necessary for the foreseen fibrous board utilization. When used for catalytic methane combustion, the catalyst is preferably a noble metal selected in the eighth group of the periodic table, preferably rhodium (Rh) and most preferably palladium (Pd).

The functionalization phase can be accomplished according to different embodiments of the process of the invention.

In a first case a functionalized fiber board providing the catalyst 27 only on the surface of the layer 25 of oxide 26 is obtained; for the sake of clarity Fig. 2 shows the catalyst only on one portion of the layer 25 surface. In order to obtain such a configuration the board coated with the porous oxide can be plunged, for a period of 10-100 minutes, into a solution containing a catalyst precursor compound, kept at a temperature in the range from about 25 to 50°C. The catalyst precursor solution is prepared according to principles similar to those previously explained for the solution to be atomized for the second oxide layer production. The solvent is preferably water, alcohol or a hydroalcoholic mixture. Simple nitrates are preferably used as catalyst precursor compounds; salts whose cation is an amino-complex of the metal can be also used in case of functionalization with Pd or Rh. Then, the board is withdrawn from the solution and treated at 500°C for about 30-120 minutes to convert the catalyst precursor, in a reducing environment or in air depending on whether the catalyst has to be obtained in the metallic or oxidized state.

Otherwise, the catalyst precursor containing solution can be atomized according to the procedures above described relating to the porous oxide layer formation, keeping the substrate at a temperature of about 50°C with atomization being repeated 1-10 times. Again, it is preferable to perform a successive thermal treatment in a muffle at about 500°C in order to cause the catalyst precursor conversion to elemental metal or oxide and to stabilize the catalyst deposit.

In both cases, the catalyst compound solution concentration is about 1% in metal weight to the solution weight. With palladium being considered, the nitrate, Pd(NO₃)₂, is the preferred precursor.

According to an alternative embodiment of the invention, the forming operations of the layer 35 of porous oxide 36 and functionalization by the catalyst 37 are simultaneously performed, and a functionalized board providing the catalyst both on the surface and inside the layer 35 of oxide is obtained; for the sake of clarity Fig. 3 shows the catalyst only in one portion of the layer 35. In this case, a solution containing both porous oxide 36 precursor and catalyst 37 precursor is atomized, according to the above described procedure, on the board of fibers coated only by the first layer 33 of compact oxide. This alternative route for the functionalized fibrous boards production is advantageous in that it requires a lower number of operations, but in this case part of the catalyst is kept inside the porous oxide structure, therefore being not available to effect its catalytic function.

The invention will be further illustrated by the following examples. These non limiting examples illustrate some embodiments intended to teach those skilled in the art how to put the invention into practice, and intended to represent the considered best way to realize the invention.

### EXAMPLE 1

A Bekitherm® board having side dimensions of 100 x 200 mm and thickness of about 5 mm, made of Fecralloy® alloy fibers, is treated in a muffle for half an hour at 1100°C under a static air atmosphere. Separately, a saturated solution of nonahydrate aluminum nitrate, Al(NO₃)₂ x 9 H₂O is prepared, obtained by adding the salt to a mixture composed by 100 ml of distilled water and 50 ml of isopropylic alcohol, (CH₃)₂CH-OH, until a deposit of the aluminum nitrate is left in the container. 10 ml of the clear solution above the deposit are taken and put into the tank of a spraying device, of a known kind, with nozzle and a feed dip hose in the bottom of the tank. The board pulled out from the muffle is cooled and positioned on a heating plate whose temperature is adjusted at 80°C. The solution is atomized on the board by alternating atomization phases, of about 30 seconds each, and standby phases, of about 5 minutes each; atomization of the whole solution amount requires 30 atomization phases. The board is heated at 200°C for 2 minutes, to favour complete solvent removal, and then at 500°C for 1 hour in air to turn aluminum nitrate into aluminum oxide. The board is then cooled to 50°C, and 6 ml of a palladium nitrate distilled water solution are atomized thereon, by 10 successive atomization phases, by the procedure discussed for the aluminum nitrate solution atomization. The board is finally treated under air, first at 500°C for 1 hour and then at 750°C for 1 hour.

### EXAMPLE 2

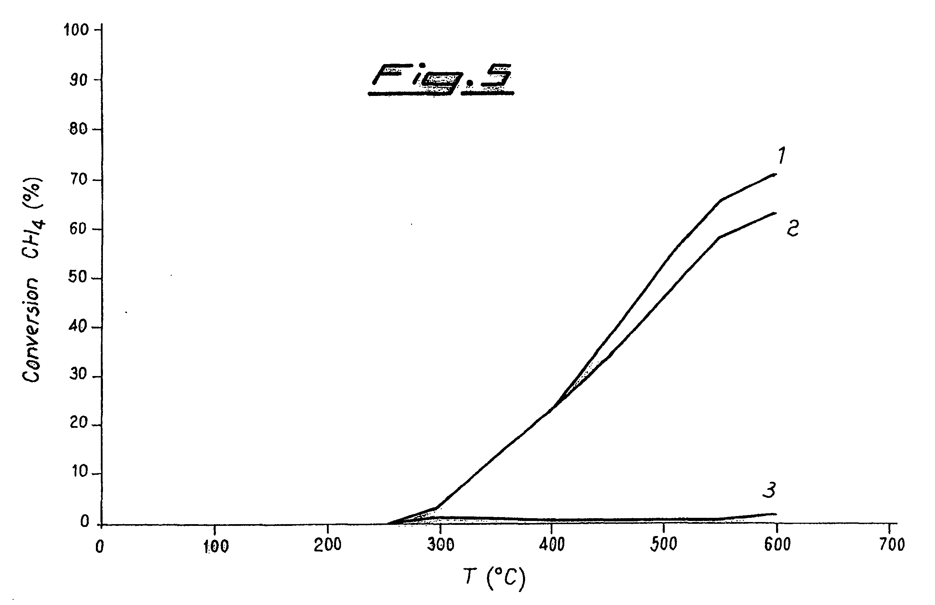

The methane conversion efficiency of the functionalized fibrous board prepared according to Example 1 is tested. The test is carried out by supplying a mixture of known composition containing methane and oxygen, at a prefixed temperature, to the catalytic board, and by measuring the unburnt methane percentage outlet from the measuring system by a organic compound sensor T.O.C. ("Total Organic Carbon") of the Company Nira Instruments, mod. 801-F. The measuring system is represented in the scheme of Fig. 4. A tank 41 for the gas to be analyzed, and a tank 42 for air used as a reference gas are provided, respectively connected through lines 43 and 44 to a valve system (in the Figure schematized as element 45) supplying alternatively the reference gas and the mixture to be analyzed to measurement chamber 47 through line 46. The measurement chamber consists of a metal cylinder having internal diameter of 26 mm, 200 mm high. A disk 48 with height of about 8 mm and diameter of 26 mm, equal to the measuring chamber internal diameter, is cut from the functionalized fibrous board of Example 1. Disk 48 is positioned at half-height of the measuring chamber, in the portion with the most uniform temperature, supported by little quartz cylinders 49, having diameter of 4 mm and height of 4 mm with the purpose of homogeneously spreading the inlet gas flow onto disk 48, besides that of supporting the sample. The measuring chamber is vertically positioned, with the gas flowing upwards. The outlet gas from chamber 47 is supplied through line 50 to T.O.C. sensor 51.

Before the test, the sample is treated in the measuring chamber 47 at 400°C for 1 hour under air flow in order to remove possible impurities. The sample is then allowed to cool to 300°C, which is the test initial temperature, still maintaining the same under a constant air flow rate of 15 Nliters/min. 5 minutes after the temperature stabilization at 300°C, a first analysis by T.O.C. sensor is performed, a sample of 0,2 ml of air from the measuring chamber outlet being supplied to the sensor; such a measurement provides for the reference value for the measure at 300°C. Subsequently, the test mixture having the volume percentage composition of methane 1%, air 30% and nitrogen 69% is supplied, at the same flow rate of 15 Nliters/min., to the measuring chamber, kept at 300°C; the gas outlet from chamber 47 is supplied to sensor 51, measuring the residual methane quantity. The conversion percentage of methane on the sample at 300°C is determined from the residual methane value, compared to the concentration of methane entering the measuring chamber. The test is repeated at intervals of 50°C until reaching 600°C, alternating air and the methane/air/nitrogen mixture.

The test results, expressed as methane conversion percentage (%) as a function of the temperature in °C, are shown in Fig. 5 as curve 1.

### EXAMPLE 3

The test of Example 2 is repeated. The test results are shown in Fig. 5 as curve 2.

### EXAMPLE 4 (COMPARATIVE)

Example 2 test is repeated using a board prepared by the procedure of example 1, but not functionalized by the noble metal. This test result is shown in Fig. 5, as curve 3.

As can be appreciated by the results shown in Fig. 5, the functionalized boards prepared according to the invention reduce effectively the methane combustion temperature; particularly, by use of these boards the methane combustion starts already at 300°C, and conversion values in the range from 60 to 70% are achieved at 600°C, while non-functionalized boards show at 600°C no sensible methane conversion.

The invention process allows to coat with oxides 26; 36 and subsequently to functionalize with catalysts 27; 37 the whole fiber surface of a fibrous board, differently from techniques such as plasma spray, flame pyrolisis or similar, these latter leading to coating and functionalizing only the surfaces facing spraying nozzles and directly exposed towards them. Further, this allows the production of functionalized fibrous boards of complex geometry, such as caps, having the whole available fiber surface functionalized, which is not possible by the methods known in the art.

## Claims

1. A process for the production of metallic fiber boards (1) functionalized by catalyst comprising the following steps:
- providing a metallic fiber board (21; 31);
- growing a first superficial layer (23; 33) of oxide (24; 34) on the board fibers by thermal oxidation;
- forming a second layer (25; 35) of porous oxide (26; 36) on the first oxide layer;
- functionalizing the second oxide layer by means of a catalyst (27; 37);
**characterized in that** the second oxide layer is produced by atomizing a solution of a precursor compound of said oxide on the oxidized board kept at a temperature in the range of 50 to 150°C, followed by thermal decomposition of said precursor compound.

2. A process according to claim 1 wherein the formation of the layer (25) of porous oxide (26) and functionalization thereof are carried out by two successive operations.

3. A process according to claim 2 wherein the metallic fiber board comprises fibers (21) of an alloy containing iron, chromium and aluminum.

4. A process according to claim 2 wherein the step of growing the first layer (23) of the superficial oxide (24) on the board fibers (21) is carried out by oxidation of the fibers under air, oxygen, air/oxygen mixtures or nitrogen/oxygen mixtures or water vapour.

5. A process according to claim 4 wherein oxidation occurs at temperatures in the range from 550 to 1200°C, for periods from 10 minutes to 10 hours.

6. A process according to claim 5 wherein oxidation occurs at temperatures in the range from 1000 to 1100°C, for periods in the range from half an hour to 2 hours.

7. A process according to claim 2 wherein the second oxide layer (25) is comprised of aluminum oxide, silicon oxide or combinations thereof.

8. A process according to claim 2 wherein the precursor compound for the second layer oxide is a nitrate, an acetate or an organometallic compound of aluminum or silicon.

9. A process according to claim 8 wherein the precursor compound for the second layer oxide is an aluminum or silicon alkoxide having general formula M(OX)ₙ, wherein M is aluminum or silicon, X is a hydrocarbon radical and n coincides with the valence of the M cation.

10. A process according to claim 2 wherein the precursor compound for the second layer oxide is dissolved in water, alcohols or hydroalcoholic mixtures.

11. A process according to claim 1 wherein the temperature is kept from about 80 to 120°C.

12. A process according to claim 2 wherein the step of forming the second layer (25) of oxide (26) is accomplished by alternating atomization and standby phases.

13. A process according to claim 12 wherein atomization phases last about 2 minutes, with a solution flow rate of about 1 ml per 100 cm² of board surface and the standby phases last about from 5 to 10 minutes.

14. A process according to claim 2 wherein the operation of formation of the second layer (25) of oxide (26) is followed by a thermal treatment stabilizing the oxide (26), carried out under air at a temperature of about 500°C for a period between about 1 and 3 hours.

15. A process according to claim 2 wherein the catalyst (27) is a noble metal selected among elements of the eighth group of the periodic table.

16. A process according to claim 15 wherein the catalyst is selected between palladium and rhodium.

17. A process according to claim 2 wherein the step of functionalization by the catalyst (27) is carried out by plunging the board, coated by the second layer (25) of oxide (26) in a catalyst precursor-containing solution.

18. A process according to claim 17 wherein, when the catalyst is palladium or rhodium, the precursor is selected among metal nitrates or metal amino-complexes.

19. A process according to claim 18 wherein the board, after withdrawal from the catalyst precursor solution, is treated at about 500°C for a period of about 30 to 120 minutes.

20. A process according to claim 19 wherein the thermal treatment is carried out in a reducing environment.

21. A process according to claim 19 wherein the thermal treatment is carried out in air.

22. A process according to claim 2 wherein the step of functionalization by the catalyst (27) is carried out by atomizing a catalyst precursor solution on the board kept at a temperature of about 50°C.

23. A process according to claim 22 further comprising, as the last operation, a thermal treatment carried out in air at a temperature of about 500°C for a period in the range of about 1 to 3 hours.

24. A process according to claim 1 wherein the formation of the layer (35) of porous oxide (36) and the functionalization thereof are carried out in one single operation.

25. A process according to claim 24 wherein the metallic fiber board comprises fibers (31) of an alloy containing iron, chromium and aluminum.

26. A process according to claim 24 wherein the step of growing the first layer (33) of superficial oxide (34) on the board fibers (31) is carried out under air, oxygen, air/oxygen mixtures or nitrogen/oxygen mixtures or water vapour.

27. A process according to claim 26 wherein the step of growing the first layer (33) of superficial oxide (34) on the board fibers is carried out at temperatures from about 550 to 1200°C, for periods from 10 minutes to 10 hours.

28. A process according to claim 27 wherein said growing step is carried out at temperatures from 1000 to 1100°C, for periods from half an hour to 2 hours.

29. A process according to claim 24 wherein the second layer (35) of oxide (36) comprises aluminum oxide, silicon oxide or combinations thereof, and contains dispersedly a catalyst (37) selected among the metals of the eighth group of the periodic table.

30. A process according to claim 24 wherein the second layer (35) of oxide comprising the catalyst is produced by atomization of a solution containing a precursor of the second layer oxide and a catalyst precursor.

31. A process according to claim 30 wherein the solution comprises a precursor of the second layer oxide selected from an aluminum or silicon nitrate, acetate or organometallic compound, a catalyst precursor selected among palladium or rhodium nitrates or amino-complexes and a solvent selected among water, alcohols and hydroalcoholic mixtures.

32. A process according to claim 31 wherein the precursor compound for the second layer oxide is an aluminum or silicon alkoxide of general formula M(OX)ₙ, wherein M is aluminum or silicon, X is a hydrocarbon radical and n coincides with the valence of the M cation.

33. A process according to claim 30 wherein the solution atomization step is carried out by alternating atomization and standby phases.

34. A process according to claim 33 wherein the atomization phases last about 2 minutes, with a solution flow rate of about 1 ml for 100 cm² of the board surface and the standby phases last about from 5 to 10 minutes.

35. A process according to claim 30 wherein the step of formation of the second layer (35) of oxide (36) comprising the catalyst (37) is followed by a thermal treatment at a temperature of about 500°C for a period of about from 1 to 3 hours.

36. A process according to claim 35 wherein the thermal treatment is carried out in a reducing environment.

37. A process according to claim 35 wherein the thermal treatment is carried out in air.

## Patentansprüche

1. Verfahren zur Herstellung metallischer Faserplatten (1), die mittels eines Katalysators funktionalisiert worden sind, umfassend die folgenden Schritte:
- Bereitstellen einer metallischen Faserplatte (21; 31);
- Bilden einer ersten Oberflächenschicht (23; 33) eines Oxids (24; 34) auf den Plattenfasern durch thermische Oxidation;
- Bilden einer zweiten Schicht (25; 35) eines porösen Oxids (26; 36) auf der ersten Oxidschicht;
- Funktionalisieren der zweiten Oxidschicht mittels eines Katalysators (27; 37);
**dadurch gekennzeichnet, dass** die zweite Oxidschicht durch Versprühen einer Lösung einer Vorgängerverbindung dieses Oxids auf die oxidierte Platte erzeugt wird, deren Temperatur im Bereich von 50 bis 150°C gehalten wird, gefolgt von der thermischen Zersetzung dieser Vorgängerverbindung.

2. Verfahren nach Anspruch 1, in dem die Bildung der Schicht (25) an porösem Oxid (26) und deren Funktionalisierung in zwei aufeinander folgenden Schritten durchgeführt wird.

3. Verfahren nach Anspruch 2, in dem die metallische Faserplatte Fasern (21) einer Legierung, die Eisen, Chrom und Aluminium enthält, umfasst.

4. Verfahren nach Anspruch 2, in dem der Schritt des Bildens der ersten Schicht (23) an oberflächlichem Oxid (24) auf den Plattenfasern (21) durch Oxidation der Fasern an Luft, Sauerstoff, Luft/Sauerstoffgemischen oder Stickstoff/Sauerstoffgemischen oder Wasserdampf ausgeführt wird.

5. Verfahren nach Anspruch 4, in dem die Oxidation bei Temperaturen im Bereich von 550 bis 1.200°C für Zeitdauern von 10 Minuten bis 10 Stunden stattfindet.

6. Verfahren nach Anspruch 5, in dem die Oxidation bei Temperaturen im Bereich von 1.000 bis 1.100°C für Zeitdauern im Bereich von einer halben Stunde bis einer Stunde stattfindet.

7. Verfahren nach Anspruch 2, in dem die zweite Oxidschicht (25) Aluminiumoxid, Siliciumoxid oder Kombinationen hiervon umfasst.

8. Verfahren nach Anspruch 2, in dem die Vorgängerverbindung für die zweite Oxidschicht ein Nitrat, Acetat oder eine Organometallverbindung von Aluminium oder Silicium ist.

9. Verfahren nach Anspruch 8, in dem die Vorgängerverbindung für die zweite Oxidschicht ein Aluminium- oder Siliciumalkoxid mit der allgemeinen Formel M(OX)ₙ ist, in der M Aluminium oder Silicium, X ein Kohlenwasserstoffradikal ist und n mit den Valenzen des M-Kations übereinstimmt.

10. Verfahren nach Anspruch 2, in dem die Vorgängerverbindung für die zweite Oxidschicht in Wasser, Alkoholen oder alkoholisch-wässrigen Gemischen gelöst ist.

11. Verfahren nach Anspruch 1, in dem die Temperatur etwa 80 bis 120°C beträgt.

12. Verfahren nach Anspruch 2, in dem der Bildungsschritt der zweiten Schicht (25) an Oxid (26) durch abwechselnde Versprühungs- und Standby-Phasen durchgeführt wird.

13. Verfahren nach Anspruch 12, in dem die Versprühungsphasen etwa 2 Minuten dauern, mit einer Lösungsdurchflussgeschwindigkeit von etwa 1 ml pro 100 cm² der Plattenoberfläche und Standby-Phasen von etwa 5 bis 10 Minuten.

14. Verfahren nach Anspruch 2, in dem der Arbeitsgang der Bildung der zweiten Schicht (25) an Oxid (26) von einer thermischen Behandlung gefolgt ist, die das Oxid (26) stabilisiert und an Luft bei einer Temperatur von etwa 500°C für eine Zeitdauer von zwischen etwa 1 und 3 Stunden durchgeführt wird.

15. Verfahren nach Anspruch 2, in dem der Katalysator (27) ein Edelmetall ist, ausgewählt aus den Elementen der achten Gruppe des Periodensystems.

16. Verfahren nach Anspruch 15, in dem der Katalysator ausgewählt ist aus Palladium und Rhodium.

17. Verfahren nach Anspruch 2, in dem der Schritt der Funktionalisierung mittels des Katalysators (27) durch Eintauchen der Platte, die mit der zweiten Schicht (25) an Oxid (26) beschichtet ist, in eine Lösung, die den Katalysatorvorgänger enthält, durchgeführt wird.

18. Verfahren nach Anspruch 17, in dem der Vorgänger ausgewählt ist aus Metallnitraten oder Metallaminokomplexen, wenn der Katalysator Palladium oder Rhodium ist.

19. Verfahren nach Anspruch 18, in dem die Platte nach dem Entfernen aus der Katalysatorvorgängerlösung bei etwa 500°C für eine Zeitdauer von etwa 30 bis 120 Minuten behandelt wird.

20. Verfahren nach Anspruch 19, in dem die thermische Behandlung in einer reduzierenden Umgebung ausgeführt wird.

21. Verfahren nach Anspruch 19, in dem die thermische Behandlung an Luft ausgeführt wird.

22. Verfahren nach Anspruch 2, in dem der Schritt der Funktionalisierung mittels des Katalysators (27) ausgeführt wird durch Versprühen einer Katalysatorvorgängerlösung auf die Platte, die auf eine Temperatur von etwa 50°C gehalten wird.

23. Verfahren nach Anspruch 22, weiter umfassend als letzten Arbeitsgang eine thermische Behandlung, die an Luft bei einer Temperatur von etwa 500°C für eine Zeitdauer von etwa 1 bis 3 Stunden ausgeführt wird.

24. Verfahren nach Anspruch 1, in dem die Bildung der Schicht (35) an porösem Oxid (36) und die Funktionalisierung hiervon in einem einzigen Arbeitsschritt ausgeführt werden.

25. Verfahren nach Anspruch 24, in dem die metallische Faserplatte Fasern (31) einer Legierung, die Eisen, Chrom und Aluminium enthält, umfasst.

26. Verfahren nach Anspruch 24, in dem der Schritt der Bildung der ersten Schicht (33) an oberflächlichem Oxid (34) auf den Plattenfasern (31) an Luft, Sauerstoff, Luft/Sauerstoffgemischen oder Stickstoff/Sauerstoffgemischen oder Wasserdampf ausgeführt wird.

27. Verfahren nach Anspruch 26, in dem der Schritt der Bildung der ersten Schicht (33) an oberflächlichem Oxid (34) auf den Plattenfasern bei Temperaturen von etwa 550 bis 1.200°C für Zeiträume von 10 Minuten bis 10 Stunden ausgeführt wird.

28. Verfahren nach Anspruch 27, in dem der Bildungsschritt bei Temperaturen von 1.000 bis 1.100°C für Zeiträume von einer halben Stunde bis 2 Stunden ausgeführt wird.

29. Verfahren nach Anspruch 24, in dem die zweite Schicht (35) an Oxid (36) Aluminiumoxid, Siliciumoxid oder Kombinationen hiervon umfasst und einen feinverteilten Katalysator (37), ausgewählt aus Metallen der achten Gruppe des Periodensystems, enthält.

30. Verfahren nach Anspruch 24, in dem die zweite Schicht (35) an Oxid, die den Katalysator umfasst, hergestellt wird über Versprühen einer Lösung, die den Vorgänger des Oxides der zweiten Schicht enthält und einen Katalysatorvorgänger.

31. Verfahren nach Anspruch 30, in dem die Lösung umfasst einen Vorgänger des in der zweiten Schicht enthaltenen Oxids, ausgewählt aus Aluminium oder Siliciumnitrat, Acetat oder einer Organometallverbindung, einen Katalysatorvorgänger, ausgewählt aus Palladium oder Rhodiumnitraten oder Aminkomplexen und einem Lösungsmittel, ausgewählt aus Wasser, Alkoholen und alkoholisch-wässrigen Gemischen.

32. Verfahren nach Anspruch 31, in dem die Vorgängerverbindung des Oxids der zweiten Schicht ein Aluminium oder Siliciumalkoxid der allgemeinen Formel M(OX)ₙ ist, in der M Aluminium oder Silicium, X ein Kohlenwasserstoffradikal ist, und n mit den Valenzen des M-Kations übereinstimmt.

33. Verfahren nach Anspruch 30, in dem der Arbeitsgang des Versprühens der Lösung durch abwechselndes Versprühen und Standby-Phasen ausgeführt wird.

34. Verfahren nach Anspruch 33, in dem die Versprühungsphasen etwa 2 Minuten dauern mit einer Durchflussgeschwindigkeit von etwa 1 ml auf 100 cm² der Plattenoberfläche und die Standby-Phasen etwa 5 bis 10 Minuten andauern.

35. Verfahren nach Anspruch 30, in dem der Schritt der Bildung der zweiten Schicht (35) an Oxid (36), die den Katalysator (37) umfasst gefolgt ist, von einer thermischen Behandlung bei einer Temperatur von etwa 500°C für einen Zeitraum von etwa 1 bis 3 Stunden.

36. Verfahren nach Anspruch 35, in dem die thermische Behandlung in einer reduzierenden Umgebung ausgeführt wird.

37. Verfahren nach Anspruch 35, in dem die thermische Behandlung an Luft ausgeführt wird.

## Revendications

1. Procédé de production de panneaux de fibres métalliques (1) fonctionnalisées par un catalyseur comprenant les étapes suivantes :
- fourniture d'un panneau de fibres métalliques (21 ; 31) ;
- croissance d'une première couche superficielle (23 ; 33) d'oxyde (24 ; 34) sur les fibres du panneau par oxydation thermique ;
- formation d'une seconde couche (25 ; 35) d'oxyde poreux (26 ; 36) sur la première couche d'oxyde ;
- fonctionnalisation de la seconde couche d'oxyde au moyen d'un catalyseur (27 ; 37) ;
**caractérisé en ce que** la seconde couche d'oxyde est produite par atomisation d'une solution d'un composé précurseur dudit oxyde sur le panneau oxydé maintenu à une température située dans la plage de 50 à 150°C, suivie par la décomposition thermique dudit composé précurseur.

2. Procédé selon la revendication 1, dans lequel la formation de la couche (25) d'oxyde poreux (26) et la fonctionnalisation de celui-ci sont conduites par l'intermédiaire de deux opérations successives.

3. Procédé selon la revendication 2, dans lequel le panneau de fibres métalliques comprend des fibres (21) d'un alliage contenant du fer, du chrome et de l'aluminium.

4. Procédé selon la revendication 2, dans lequel l'étape de croissance de la première couche (23) de l'oxyde superficiel (24) sur les fibres du panneau (21) est conduite par oxydation des fibres à l'air, sous oxygène, sous mélanges d'air/oxygène ou des mélanges d'azote/oxygène ou à la vapeur d'eau.

5. Procédé selon la revendication 4, dans lequel l'oxydation survient à des températures situées dans la plage de 550 à 1 200°C, pendant des périodes de 10 minutes à 10 heures.

6. Procédé selon la revendication 5, dans lequel l'oxydation survient à des températures situées dans la plage de 1 000 à 1 100°C, pendant des périodes situées dans la plage d'une demi-heure à 2 heures.

7. Procédé selon la revendication 2, dans lequel la seconde couche d'oxyde (25) comprend de l'oxyde d'aluminium, de l'oxyde de silicium ou des combinaisons de ceux-ci.

8. Procédé selon la revendication 2, dans lequel le composé précurseur pour la seconde couche d'oxyde est un nitrate, un acétate ou un composé organométallique d'aluminium ou de silicium.

9. Procédé selon la revendication 8, dans lequel le composé précurseur pour la seconde couche d'oxyde est un alcoolate d'aluminium ou de silicium répondant à la formule générale M(OX)ₙ, dans laquelle M représente l'aluminium ou le silicium, X représente un radical hydrocarboné et n coïncide avec la valence du cation M.

10. Procédé selon la revendication 2, dans lequel le composé précurseur pour la seconde couche d'oxyde est dissous dans de l'eau, des alcools ou des mélanges hydroalcooliques.

11. Procédé selon la revendication 1, dans lequel la température est maintenue d'environ 80 à 120°C.

12. Procédé selon la revendication 2, dans lequel l'étape de formation de la seconde couche (25) d'oxyde (26) est accomplie en faisant alterner des phases d'atomisation et de mise en attente.

13. Procédé selon la revendication 2, dans lequel les phases d'atomisation durent environ 2 minutes, avec une vitesse d'écoulement de la solution d'environ 1 ml par 100 cm² de surface de panneau et les phases de mise en attente durent environ 5 à 10 minutes.

14. Procédé selon la revendication 2, dans lequel l'opération de formation de la seconde couche (25) d'oxyde (26) est suivie d'une stabilisation par traitement thermique de l'oxyde (26), conduite à l'air à une température d'environ 500°C sur une période située entre environ 1 et 3 heures.

15. Procédé selon la revendication 2, dans lequel le catalyseur (27) est un métal noble choisi parmi les éléments du huitième groupe du tableau périodique.

16. Procédé selon la revendication 15, dans lequel le catalyseur est choisi parmi le palladium et le rhodium.

17. Procédé selon la revendication 2, dans lequel l'étape de fonctionnalisation par le catalyseur (27) est conduite en plongeant le panneau, revêtu de la seconde couche (25) d'oxyde (26), dans une solution contenant un précurseur de catalyseur.

18. Procédé selon la revendication 17, dans lequel, lorsque le catalyseur est le palladium ou le rhodium, le précurseur est choisi parmi les nitrates métalliques ou les amino-complexes métalliques.

19. Procédé selon la revendication 18, dans lequel le panneau, après retrait de la solution de précurseur de catalyseur, est traité à environ 500°C sur une période d'environ 30 à 120 minutes.

20. Procédé selon la revendication 19, dans lequel le traitement thermique est conduit dans un environnement réducteur.

21. Procédé selon la revendication 19, dans lequel le traitement thermique est conduit à l'air.

22. Procédé selon la revendication 2, dans lequel l'étape de fonctionnalisation par le catalyseur (27) est conduite par atomisation d'une solution précurseur de catalyseur sur le panneau maintenu à une température d'environ 50°C.

23. Procédé selon la revendication 22, comprenant en outre comme dernière opération, un traitement thermique conduit à l'air à une température d'environ 500°C durant une période située dans la plage d'environ 1 à 3 heures.

24. Procédé selon la revendication 1, dans lequel la formation de la couche (35) d'oxyde poreux (36) et la fonctionnalisation de celle-ci sont conduites en une opération unique.

25. Procédé selon la revendication 24, dans lequel le panneau de fibres métalliques comprend des fibres (31) d'un alliage contenant du fer, du chrome et de l'aluminium.

26. Procédé selon la revendication 24 dans lequel l'étape de croissance de la première couche (33) d'oxyde superficiel (34) sur les fibres du panneau (31) est conduite à l'air, sous oxygène, mélanges d'air/oxygène ou mélanges d'azote/oxygène ou de vapeur d'eau.

27. Procédé selon la revendication 26, dans lequel l'étape de croissance de la première couche (33) d'oxyde superficiel (34) sur les fibres du panneau est conduite à des températures d'environ 550 à 1 200°C, pendant des périodes de 10 minutes à 10 heures.

28. Procédé selon la revendication 27 dans lequel ladite étape de croissance est conduite à des températures de 1 000 à 1 100°C, pendant des périodes d'une demi-heure à 2 heures.

29. Procédé selon la revendication 24, dans lequel la seconde couche (35) d'oxyde (36) comprend de l'oxyde d'aluminium, de l'oxyde de silicium ou des combinaisons de ceux-ci, et contient, de manière dispersée, un catalyseur (37) choisi parmi les métaux du huitième groupe du tableau périodique.

30. Procédé selon la revendication 24, dans lequel la seconde couche (35) d'oxyde comprenant le catalyseur est produite par atomisation d'une solution contenant un précurseur de la seconde couche d'oxyde et un précurseur de catalyseur.

31. Procédé selon la revendication 30, dans lequel la solution comprend un précurseur de la seconde couche d'oxyde choisi parmi un nitrate d'aluminium ou un nitrate de silicium, un composé acétate ou organométallique, un précurseur de catalyseur choisi parmi les nitrates ou les amino-complexes de palladium ou de rhodium et un solvant choisi parmi l'eau, les alcools et les mélanges hydroalcooliques.

32. Procédé selon la revendication 31, dans lequel le composé précurseur pour la seconde couche d'oxyde est un alcoolate d'aluminium ou de silicium de formule générale M(OX)ₙ, dans laquelle M représente l'aluminium ou le silicium, X représente un radical hydrocarboné et n coïncide avec la valence du cation M.

33. Procédé selon la revendication 30, dans lequel l'étape d'atomisation en solution est conduite en faisant alterner des phases d'atomisation et de mise en attente.

34. Procédé selon la revendication 33, dans lequel les phases d'atomisation durent environ 2 minutes, avec une vitesse d'écoulement de la solution d'environ 1 ml pour 100 cm² de la surface du panneau et les phases de mise en attente durent environ 5 à 10 minutes.

35. Procédé selon la revendication 30, dans lequel l'étape de formation de la seconde couche (35) d'oxyde (36) comprenant le catalyseur (37) est suivie d'un traitement thermique à une température d'environ 500°C pendant une période d'environ 1 à 3 heures.

36. Procédé selon la revendication 35, dans lequel le traitement thermique est conduit dans un environnement réducteur.

37. Procédé selon la revendication 35, dans lequel le traitement thermique est conduit à l'air.
